# EUROPÄISCHE PATENTSCHRIFT

(11) **EP 1 309 817 B1**
(45) Veröffentlichungstag und Bekanntmachung des Hinweises auf die Patenterteilung: **02.05.2007**
(21) Anmeldenummer: 01969357.1
(22) Anmeldetag: 09.07.2001
(51) Int. Cl.: F16M 11/04

(54) **BEFESTIGUNSVORRICHTUNG**
FIXING DEVICE
DISPOSITIF DE FIXATION

(30) Priorität: 17.08.2000 DE 20014249 U; 06.09.2000 DE 20015399 U
(43) Veröffentlichungstag der Anmeldung: 14.05.2003
(73) Patentinhaber: Mavig GmbH, 81829 München (DE)
(72) Erfinder: KUHN, Peter, 81545 München (DE)
(74) Vertreter: Körfer, Thomas
(86) Internationale Anmeldenummer: PCT/EP2001/007893
(87) Internationale Veröffentlichungsnummer: WO 2002/014735

(56) Entgegenhaltungen:
- EP-A- 0 392 303
- WO-A-00/22342
- CH-A- 522 853
- DE-U- 20 015 399

## Beschreibung

Die Erfindung betrifft eine Befestigungsvorrichtung zum Befestigen von zumindest einem. Tragarm, insbesondere Federarm.

Zum Tragen von medizinischen Apparaten werden in Krankenhäusern, Arztpraxen und ähnlichen Einrichtungen Träger verwendet, die über einen vorzugsweise als Federarm ausgebildeten Tragarm an der Decke des jeweiligen Behandlungsraumes bzw. Operationssaals aufgehängt sind. Dadurch ist gewährleistet, daß der Boden des Behandlungsraumes bzw. Operationssaals stets frei zugänglich und insbesondere einfach zu reinigen und zu desinfizieren ist, so daß die gestellten Hygieneanforderungen erfüllt werden können. Um den Tragarm an der Decke des jeweiligen Behandlungsraumes bzw. Operationssaals aufzuhängen, ist eine Befestigungsvorrichtung erforderlich, die nach Möglichkeit ein Schwenken des Tragearms in der Horizontalen ermöglicht, so daß, gegebenenfalls in Zusammenwirkung mit einer durch den Tragarm gegebenen Verstellmöglichkeit, eine relative Veränderung der Orientierung und Lage der medizinischen Apparate in dem Behandlungsraum bzw. Operationssaal möglich ist.

Eine solche Befestigungsvorrichtung ist beispielsweise aus der DE 298 18 108 U1 bekannt. Die bekannte Befestigungsvorrichtung weist einen Grundkörper auf, der mit einem an einem Verbindungsabschnitt des Grundkörpers angeordneten Verbindungselement, z.B. mittels Schraubdübeln, an der Decke befestigbar ist. Längsseits des Grundkörpers sind zwei sich gegenüberliegende Lagerzapfen vorgesehen, die nach oben, d.h. in Richtung zur Decke, offen sind und die nach unten, d.h. in Richtung der Schwerkraft, mit Lagerplatten verbunden sind. Auf die Lagerzapfen ist jeweils eine Lagerhülse eines Tragarms aufsteckbar, wobei die Lagerhülse durch die Lagerplatten gegen die Schwerkraft abgestützt wird. Zwischen den beiden Lagerzapfen ist ein Teil des Grundkörpers der Befestigungsvorrichtung angeordnet.

Die aus der DE 298 18 108 U1 bekannte Befestigungsvorrichtung hat mehrere Nachteile. Da die Lagerzapfen längsseits des Grundkörpers angeordnet sind, ist die Drehbeweglichkeit eines mit seiner Lagerhülse auf dem Lagerzapfen befestigten Tragearms wesentlich eingeschränkt, da der' Tragearm nach einer gewissen Drehung an dem Grundkörper der Befestigungsvorrichtung anschlägt. Außerdem wird die Drehbeweglichkeit des Tragearms weiter beeinträchtigt, da sich die beiden Lagerzapfen gegenüberliegen und somit die Drehbewegung des Tragearms durch den auf dem anderen Lagerzapfen befestigten Tragearm beeinträchtigt ist.

Ein weiterer Nachteil der bekannten Befestigungsvorrichtung ist, daß durch die längsseitige Anordnung des Lagerzapfens die Achse des Lagerzapfens, die die Drehachse des Tragearms definiert, von der Mittelachse des Grundkörpers beabstandet ist, wobei durch den Abstand ein Hebelarm gegeben ist, wodurch die auf den Lagerzapfen einwirkende Gewichtskraft des Federarms und der daran befestigten Apparate ein auf die Befestigungsvorrichtung einwirkendes Drehmoment erzeugt, so daß neben der Gewichts- eine zusätzliche Momentenbelastung von der Befestigungsvorrichtung und der Verbindung der Befestigungsvorrichtung mit der besagten Decke aufzunehmen ist.

Außerdem besteht bei der bekannten Befestigungsvorrichtung die Gefahr, daß beim - insbesondere ruckhaften - Anheben des Tragarms, um beispielsweise die Höhenposition eines Apparates zu verändern, die Lagerhülse des Tragearms aus dem Lagerzapfen springt, was erhebliche Personen- und Sachschäden zur Folge haben kann.

Die EP 0392 303 A1 offenbart eine Aufhängeeinrichtung für eine Operationsleuchte mit einem Flanschrohr, einer Buchse, einem Außenrohr, einem Flansch, zwei Auslegern und und deren Anschlussstücke, Lager, elektrische Anschlüsse, sowie Schleifringe gemäß dem Oberbegriff von Anspruch 1. Für eine Einschränkung der Drehbewegung sind in jedem Anschlussstück ringförmige Aussparungen vorgesehen. In diese kann ein Anschlagring eingesetzt werden, der mit dem Flanschrohr verbunden ist. An dem Anschlagring und in den Aussparungen sind jeweils Vorsprünge vorgesehen, welche bei Verdrehung der Anschlussstücke gegenüber dem Flanschrohr aneinander stoßen und somit für eine Einschränkung der Drehbewegung sorgen.

Der Erfindung liegt daher die Aufgabe zugrunde, eine Befestigungsvorrichtung zu schaffen, bei der eine gewünschte, insbesondere beliebige, Drehbeweglichkeit eines daran befestigten Tragearms gegeben ist, die eine unnötige Belastung der Befestigungsvorrichtung vermeidet und die den hohen sicherheitstechnischen Anforderungen gerecht wird.

Die Aufgabe wird durch einen Gegenstand mit den Merkmalen des Anspruchs 1 gelöst. Vorteilhaft ist es dabei, daß der Außendurchmesser des Halterings zumindest näherungsweise dem Außendurchmesser der Lagerhülse des zu befestigenden Tragearms entspricht. Dadurch wird die Sicherheit der Halterung der Lagerhülse des Tragearms mittels des an dem Lagerabschnitt des Grundkörpers befestigten Halterings verbessert, da aus geometrischen Gründen ein Angreifen einer mechanischen Einwirkung, z.B. infolge eines herabhängenden Kabels, auf den Haltering verhindert wird. Vorteilhafte Weiterbildungen der Erfindung sind durch die in den Unteransprüchen aufgeführten Maßnahmen möglich.

Die erfindungsgemäße Befestigungsvorrichtung hat den Vorteil, daß die Drehbeweglichkeit des mit der Lagerhülse an dem Lagerabschnitt des Grundkörpers befestigten Tragearms beliebig vorgegeben werden kann, da der Lagerabschnitt in axialer Richtung am unteren Ende des Grundkörpers angeordnet ist und über den restlichen Grundkörper axial hinausragt, so daß der befestigte Federarm beim Verschwenken durch den Grundkörper nicht behindert ist. Außerdem wird die Lagerhülse des Tragearms an dem Lagerabschnitt mittels eines an dem Lagerabschnitt befestigbaren Halterings gehalten, so daß die Lagerhülse des Tragarms durch den Haltering gesichert ist und erst nach Lösen des Halterings von der Befestigungsvorrichtung entfernt werden kann. Ferner ist der Lagerabschnitt in axialer Richtung am unteren Ende des Grundkörpers angeordnet, so daß eine auf die am Lagerabschnitt befestigte Lagerhülse einwirkende Gewichtskraft zumindest im wesentlichen kein zusätzliches Drehmoment, das auf die Befestigungsvorrichtung einwirkt, hervorruft.

In vorteilhafter Weise ist ein erstes Lagerelement vorgesehen, das den Lagerabschnitt des Grundkörpers zumindest teilweise umschließt und zumindest teilweise an dem Haltering anliegt, wobei sich die Lagerhülse mittels des ersten Lagerelements an dem Haltering abstützt. Durch das erste Lagerelement und den Haltering wird ein erstes Lager gebildet, in dem die Lagerhülse des Tragearms gelagert ist.

Die Lagerung erfolgt dabei zumindest in axialer Richtung des Grundkörpers, d.h. in Richtung der Schwerkraft, um die Drehbeweglichkeit des Tragearms auch bei einer hohen Belastung, die z.B. bei Befestigung eines schweren Apparats an dem Tragearm auftritt, zu gewährleisten. Insbesondere wenn hohe, auf die Lagerhülse einwirkende Drehmomentkräfte zu erwarten sind, kann das durch das erste Lagerelement gebildete erste Lager, zudem auch eine radiale Lagerung bereitstellen.

Vorteilhaft ist es ferner, daß ein zweites Lagerelement vorgesehen ist, das den Lagerabschnitt des Grundkörpers zumindest teilweise umschließt und ein zweites Lager zur Lagerung der Lagerhülse bildet, das dem ersten durch das erste Lagerelement gebildeten Lager gegenüberliegt. Dadurch ist die Lagerhülse beidseitig gelagert, so daß eine besonders gute Drehbeweglichkeit des Tragearms gewährleistet ist.

In vorteilhafter Weise ist das zweite Lagerelement des zweiten Lagers hülsenförmig ausgebildet, wobei durch das zweite Lager eine radiale Lagerung gegeben ist. Ferner ist es vorteilhaft, daß das erste Lagerelement des ersten Lagers kreisringförmig ausgebildet ist, wobei durch das erste Lager eine axiale Lagerung gegeben ist. Da auf das erste Lager bedingt durch die geometrische Anordnung im wesentlichen die Gewichtskraft des Tragearms einwirkt, während auf das zweite Lager fast ausschließlich ein gegebenenfalls auftretendes Drehmoment einwirkt, ist hierdurch eine belastungsangepaßte Lagerung des Federarms gegeben. Zur Aufnahme eines gegebenenfalls auftretenden Drehmoments ist es allerdings von Vorteil, daß das zweite Lager auch eine axiale Lagerung und/oder das erste Lager auch eine radiale Lagerung bereitstellt.

In vorteilhafter Weise ist der Haltering mit zumindest einer Halteschraube an dem Lagerabschnitt des Grundkörpers befestigbar. Die Halteschraube kann dabei in eine Gewindebohrung, die in dem Lagerabschnitt des Grundkörpers ausgebildet ist, oder in eine an dem Lagerabschnitt des Grundkörpers ausgebildete Nut eingreifen. Die Halteschraube kann allerdings auch gegen die Oberfläche des Lagerabschnitts des Grundkörpers zur Erzeugung einer Haftreibungskraft zum Befestigen des Halterings mit einer Feststellkraft beaufschlagt werden. Jedenfalls sind durch die Halteschraube zahlreiche Befestigungsmöglichkeiten gegeben, die konstruktiv einfach zu verwirklichen sind.

Vorteilhaft ist es, daß der Grundkörper zumindest im wesentlichen rohrförmig ausgebildet ist, da sich dadurch ein kompakter Aufbau der Befestigungsvorrichtung erreichen läßt.

Vorteilhaft ist es, daß die Befestigungsvorrichtung eine an dem Verbindungsabschnitt des Grundkörpers befestigbare Sicherungseinrichtung aufweist zum Sichern einer mit dem Verbindungsabschnitt zur Aufhängung der Befestigungsvorrichtung bestehenden Verbindung. Dabei kann die Befestigungsvorrichtung beispielsweise mittels eines Verbindungsabschnitts an der Decke des Praxisraums bzw. Operationssaals befestigt werden. Wird die Verbindung, z.B. aufgrund einer übermäßigen Belastung oder eines Unfalls, gelöst, dann sichert die Sicherungseinrichtung das Herabfallen der Befestigungsvorrichtung und somit zumindest zum Teil die Aufhängung des Tragearms.

In vorteilhafter Weise sind mehrere Lagerabschnitte zum Befestigen mehrerer Tragearme vorgesehen, die in der axialen Richtung des Grundkörpers aufeinanderfolgend angeordnet sind, wobei jede der Lagerhülsen der Tragearme zur Abstützung an zumindest einem Haltering anliegt. Dadurch können an der Befestigungsvorrichtung mehrere Tragarme drehbar gelagert befestigt werden. Durch die aufeinanderfolgende Anordnung der jeweiligen Lagerabschnitte in der axialen Richtung des Grundkörpers steht jedem der Tragearme die volle Drehbeweglichkeit zur Verfügung, ohne daß einer der Tragearme in seiner Drehbeweglichkeit durch die anderen Tragearme beeinflußt ist.

Vorteilhaft ist es, daß die Befestigungsvorrichtung einen längsseits des Grundkörpers angeordneten Lagerzapfen aufweist, auf den eine Lagerhülse eines Tragearmes aufsteckbar ist. Dadurch kann der längsseitig des Grundkörpers zur Verfügung stehende Raum für die Befestigung eines Tragearmes verwendet werden, bei dem die volle Drehbeweglichkeit nicht erforderlich ist.

Ausführungsbeispiele der Erfindung sind in der Zeichnung vereinfacht dargestellt und in der nachfolgenden Beschreibung näher erläutert. Es zeigen:
- Fig. 1: eine Befestigungsvorrichtung gemäß einem ersten Ausführungsbeispiel der Erfindung;
- Fig. 2: den in Fig. 1 mit II' bezeichneten Ausschnitt der Befestigungsvorrichtung gemäß dem ersten Ausführungsbeispiel in einer axialen Schnittdarstellung entlang der mit II bezeichneten Schnittlinie;
- Fig. 3: einen Schnitt durch die Befestigungsvorrichtung gemäß dem ersten Ausführungsbeispiel entlang der in Fig. 1 mit III bezeichneten Schnittlinie; und
- Fig. 4: den in Fig. 1 mit II' bezeichneten Ausschnitt gemäß einem zweiten Ausführungsbeispiel der Erfindung.

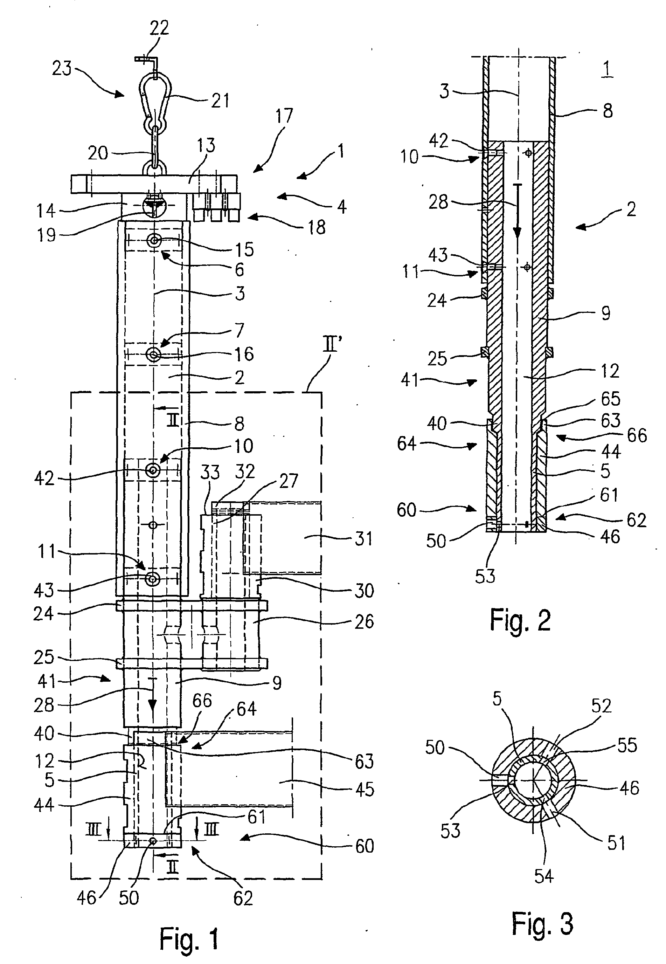

Fig. 1 zeigt ein erstes Ausführungsbeispiel einer erfindungsgemäßen Befestigungsvorrichtung 1. Die Befestigungsvorrichtung 1 dient zum Befestigen eines Tragearms, insbesondere Federarms, an einer Decke eines Behandlungsraums einer medizinischen Einrichtung oder dergleichen. Mittels des durch die Befestigungsvorrichtung an der Decke befestigten Tragarms können insbesondere Bildschirmsichtund andere medizinische Geräte bodenfrei aufgehängt werden. Die Befestigungsvorrichtung 1 eignet sich jedoch auch für andere Anwendungsfälle.

Die Befestigungsvorrichtung 1 umfaßt einen Grundkörper 2, der einen bezüglich der Achse 3 des Grundkörpers 2 in axialer Richtung am oberen Ende des Grundkörpers 2 angeordneten Verbindungsabschnitt 4 und einen in axialer Richtung am unteren Ende des Grundkörpers 2 angeordneten Lagerabschnitt 5 aufweist. Der Verbindungsabschnitt 4 ist mittels Schraubverbindungen 6, 7 mit einem rohrförmigen Zwischenabschnitt 8 des Grundkörpers 2 verbunden. Der Lagerabschnitt 5 ist an einem Lagerkörper 9 ausgebildet, der mittels der Schraubverbindungen 10, 11 mit dem Zwischenabschnitt 8 verschraubt ist. Um das Gewicht des Lagerkörpers 9 zu reduzieren, weist dieser eine axiale Durchgangsbohrung 12 auf. Die Durchgangsbohrung 12 dient bei einer Befestigung der Befestigungsvorrichtung 1 mittels eines Laufwagens an einer deckenfesten Schiene außerdem als Durchgangsbohrung für die Bremsgestängeeinheit des Laufwagens.

Der Verbindungsabschnitt 4 des Grundkörpers 2 weist eine Verbindungsplatte 13 und einen mit der Verbindungsplatte 13 verbundenen Verbindungskörper 14 auf, in den die Schrauben 15, 16 der Schraubverbindungen 6, 7 eingeschraubt sind. An der Verbindungsplatte 13 sind umfänglich mehrere, insbesondere drei, Verbindungsstellen vorgesehen, von denen in der Fig. 1 die Verbindungsstelle 17 dargestellt ist. Gemäß dem ersten Ausführungsbeispiel sind an der Verbindungsstelle 17 Schraubelemente 18 angeordnet, mittels derer die Befestigungsvorrichtung 1 an der Verbindungsplatte 13 mit der Decke eines Behandlungsraumes oder dergleichen verbindbar ist.

Der Verbindungskörper weist außerdem eine Sicherungsöse 19 auf, die mit einer Sicherungskette 20 verbunden ist. Dabei umfaßt die Sicherungskette 20 in dem beschriebenen Ausführungsbeispiel zwei Kettenglieder. Die Sicherungskette 20 verbindet die Sicherungsöse 19 mit einem Sicherungskarabiner 21, der als Schnappkarabiner ausgebildet ist. Der Sicherungskarabiner 21 ist in ein Sicherungselement 22 einhängbar, das in dem beschriebenen Ausführungsbeispiel winkelförmig ausgebildet ist. Das Sicherungselement 22 und die Verbindungsplatte 13 können an der gleichen Decke befestigt werden. Die Verbindungsplatte 13 und das Sicherungselement 22 können auch an verschiedenen Decken befestigt werden, insbesondere wenn die Verbindungsplatte 13 an einer Zwischendecke befestigt wird. Durch die Sicherungsöse 19, die Sicherungskette 20, den Sicherungskarabiner 21 und das Sicherungselement 22 ist eine Sicherungseinrichtung 23 der Befestigungsvorrichtung 1 gegeben, die eine mit der Verbindungsplatte 13 des Verbindungsabschnitts 4 zur Aufhängung der Befestigungsvorrichtung 1 bestehende Verbindung sichert. Damit alle Bauteile der Befestigungsvorrichtung 1 gesichert sind, ist die Sicherungsöse 19 am Lagerelement 9 befestigt.

Der Lagerkörper 9 ist mittels der Verbindungsplatten 24, 25 mit einem Lagerzapfen 26 verbunden, wobei die Verbindungen zum Beispiel durch Schweißen oder Hartlöten hergestellt sind. Der Lagerzapfen 26 weist einen zylindrischen Lagerabschnitt 27 auf, der nach oben, d.h. entgegen der axialen Richtung 28, längs der Achse 3 des Grundkörpers 2 der Befestigungsvorrichtung 1, offen ist. Die axiale Richtung 28 des Grundkörpers 2 ist bei montierter Befestigungsvorrichtung bevorzugt zumindest im wesentlichen in Schwerkraftsrichtung orientiert, d.h. die axiale Richtung 28 zeigt nach unten. Auf den Lagerabschnitt 27 ist eine Lagerhülse 30 eines Tragearms 31 aufsteckbar, um den Tragearm 31 an der Befestigungsvorrichtung 1 zu befestigen. Die Lagerhülse 30 des Tragearms 31 wird dabei durch die Gewichtskraft des Tragearms 31 und die auf den Tragearm 31 einwirkenden Gewichtskräfte auf dem Lagerabschnitt 27 des Lagerzapfens 26 der Befestigungsvorrichtung 1 entgegen der Schwerkraft, d.h. in Richtung 28, gehalten. Dabei ist es vorteilhaft, daß der Lagerabschnitt 27 des Lagerzapfens 26 an seinem oberen Ende 32 über die Oberkante 33 der vollständig auf den.Lagerabschnitt 27 aufgesteckten Lagerhülse 30 ragt, um eine vorteilhafte Lagerung zu erreichen und um bei einem Anheben des Tragearms 31 bezüglich der Befestigungsvorrichtung 1 ein Lösen der Lagerhülse 30 von dem Lagerabschnitt 27 des Lagerzapfens 26 zu verhindern. Um die Lagerhülse 30 zu sichern, kann ein Federring vorgesehen sein, der am oberen Ende 32 des Lagerzapfens 26 angeordnet ist. Alternativ kann am oberen Ende 32 des Lagerzapfens 26 eine Sicherungsfeder angeordnet sein, die ein Anheben der Lagerhülse 30 verhindert.

Das erste Ausführungsbeispiel der Erfindung wird nachfolgend unter zusätzlicher Bezugnahme auf die Fig. 2 näher beschrieben. Dabei sind in Fig. 2 und in allen anderen Figuren übereinstimmende Elemente mit gleichen Bezugszeichen versehen, wodurch sich eine wiederholende Beschreibung erübrigt.

Fig. 2 zeigt den in Fig. 1 mit II' gekennzeichneten Ausschnitt der Befestigungsvorrichtung 1 in einer axialen Schnittdarstellung entlang der mit II bezeichneten Schnittlinie.

Der Lagerkörper 9 weist einen Zwischenabsatz 40 auf, an dem der Lagerabschnitt 5 in den Verbindungsteil 41 des Lagerkörpers 9 übergeht, an dem die Schrauben 42, 43 der Schraubverbindungen 10, 11 in den Lagerkörper 9 eingreifen und die Verbindungsplatten 24, 25 befestigt sind. Der Lagerabschnitt 5 weist einen in axialer Richtung 28 gleich bleibenden Querschnitt auf und ist nach unten, d.h. in der axialen Richtung 28, offen. Auf den Lagerabschnitt 5 ist eine Lagerhülse 44 eines Tragearms 45 aufgebracht. Außerdem ist auf den Lagerabschnitt 5 ein Haltering 46 aufgebracht, der zum Halten der Lagerhülse 44 des Tragearms 45 an dem Lagerabschnitt 5 mit dem Lagerabschnitt 5 verbindbar ist.

In dem beschriebenen Ausführungsbeispiel erfolgt die Verbindung über drei Schraubverbindungen, die nachfolgend anhand der Fig. 3 näher beschrieben sind. Dabei zeigt die Fig. 3 einen Schnitt durch die Befestigungsvorrichtung 1 gemäß dem ersten Ausführungsbeispiel entlang der in Fig. 1 mit III bezeichneten Schnittlinie.

Der Haltering 46 weist Gewindebohrungen 50, 51, 52 auf, die gegenüberliegend zu den Bohrungen 53, 54, 55 in dem Lagerabschnitt 5 des Lagerkörpers 9 angeordnet sind. In die Gewindebohrungen 50, 51, 52 des Halterings 46 werden zum Befestigen des Halterings 46 an dem Lagerabschnitt 5 des Lagerkörpers 9 Schraubelemente eingeschraubt, die an ihrem Ende einen zapfenförmigen Abschnitt aufweisen, der in die Bohrungen 53, 54, 55 des Lagerabschnitts 5 eingreift. Dadurch ist der Haltering 46 sowohl gegenüber Verdrehen als auch ein axiales Verschieben bezüglich der Achse 3 des Grundkörpers 2 gesichert.

Wie in den Fig. 1 und 2 dargestellt, stützt sich die Lagerhülse 44 an ihrem unteren ersten Ende 60 mittels eines ersten Lagerelements 61 an dem Haltering 46 ab. Das erste Lagerelement 61 ist kreisringförmig ausgebildet, so daß das durch das erste Lagerelement 61 gebildete erste Lager 62 eine axiale Lagerung der Lagerhülse 44 gewährleistet. Die axiale Verschiebung der Lagerhülse 44 entgegen der axialen Richtung 28 ist durch den Zwischenabsatz 40 begrenzt, wobei die Lagerhülse 44 einen Kreisbund 63 aufweist, der den Zwischenabsatz 40 zumindest teilweise umgreift. An dem oberen zweiten Ende 64 der Lagerhülse 44 ist zwischen der Lagerhülse 44, insbesondere dem Kreisbund 63, und dem Lagerkörper 9, insbesondere dem Zwischenabsatz 40, ein zweites Lagerelement 65 vorgesehen. Durch das zweite Lagerelement 65 ist ein zweites Lager 66 gebildet, das hauptsächlich eine radiale Lagerung und zum Teil eine axiale Lagerung der Lagerhülse 44 gewährleistet. Dabei ist das zweite Lagerelement 65 im wesentlichen hülsenförmig ausgebildet, wobei es den Zwischenabsatz 40 an seinem unteren Ende, d.h. auf der Seite des Lagerabschnitts 5, zumindest teilweise umgreift.

Bei dem beschriebenen Ausführungsbeispiel der Erfindung umschließen die Lagerelemente 61, 65 den Lagerkörper 9 und insbesondere den Lagerabschnitt 5 radial, wobei es gegebenenfalls auch ausreicht, daß zumindest eines der Lagerelemente 61, 65 den Lagerkörper 9 und insbesondere den Lagerabschnitt 5 nur teilweise oder abschnittsweise umschließt, um die gewünschte Lagerung zu gewährleisten.

Da das zweite Lagerelement 65 den Lagerabschnitt 5 im Bereich eines verbreiterten Durchmessers, d.h. am Zwischenabsatz 40, umschließt, ist gewährleistet, daß ein Verschieben des zweiten Lagerelements 65 in einer axialen Richtung, insbesondere in der axialen Richtung 28, d.h. in Schwerkraftrichtung, verhindert ist. Da das erste Lagerelement 61 scheibenförmig ausgebildet ist und zwischen der Lagerhülse 44 und dem Haltering 46 angeordnet ist, ist eine Verschiebung des ersten Lagerelements 61 in einer axialen Richtung ohnehin verhindert.

Der Zwischenabschnitt 8, der Lagerkörper 9 und der Verbindungskörper 14 der Befestigungsvorrichtung sind zumindest im wesentlichen rohrförmig ausgebildet, so daß der Grundkörper 2 der Befestigungsvorrichtung 1, der sich im wesentlichen aus diesen Bauteilen zusammensetzt, ebenfalls zumindest im wesentlichen rohrförmig ausgebildet ist. Dadurch wird bei geringem Gewicht eine hohe mechanische Stabilität, insbesondere Verwindungssteifigkeit, der Befestigungsvorrichtung 1 erreicht, wodurch die Befestigungsvorrichtung 1 hohen Drehmomentkräften standhält. In dem beschriebenen Ausführungsbeispiel weisen der Lagerkörper 9, die Lagerhülse 44 und der Haltering 46 zumindest im wesentlichen den gleichen Außendurchmesser auf, so daß sich ein kompakter Aufbau ergibt.

Da die in den beiden Lagern 62, 66 gelagerte Lagerhülse 44 um die Achse 3 des Lagerabschnittes 5 des Grundkörpers 2 um 360° drehbar ist, ist der mit der Lagerhülse 44, z.B. durch Schweißen, verbundene Tragearm 45 beliebig und frei um die Achse 3 schwenkbar.

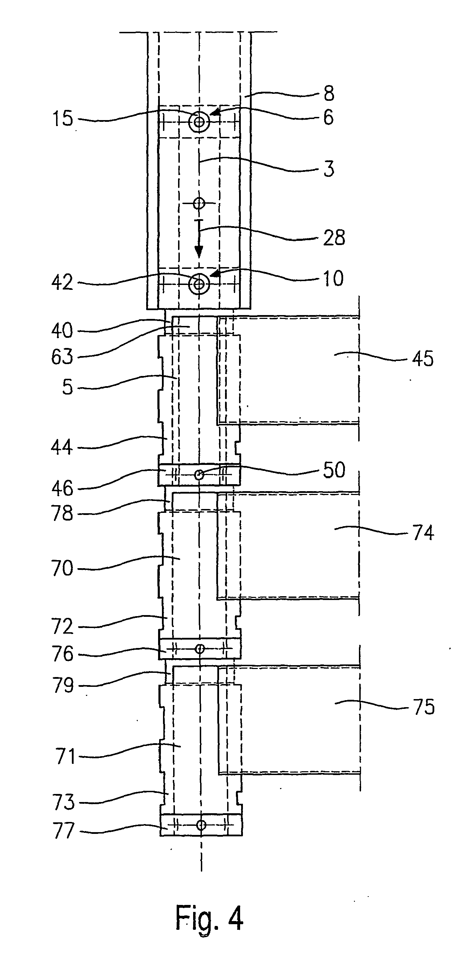

Fig. 4 zeigt den in Fig. 1 mit II' bezeichneten Ausschnitt der Befestigungsvorrichtung 1 gemäß einem zweiten Ausführungsbeispiel.

Gemäß dem zweiten Ausführungsbeispiel weist der Grundkörper 2 mehrere Lagerabschnitte 5, 70, 71 auf, an denen mittels der Lagerhülsen 44, 72, 73 die Tragearme 45, 74, 75 befestigt sind. Dabei stützt sich jede der Lagerhülsen 44, 72, 73 an einem Haltering 46, 76, 77 ab. Die Halteringe 46, 76 weisen dabei jeweils einen Abschnitt 78 bzw. 79 verringerten Durchmessers auf, um für die anschließende Lagerhülse 72 bzw. 73 einen dem Zwischenabsatz 40 entsprechenden Absatz zu bilden, der zumindest teilweise von einem dem zweiten Lagerelement 65 entsprechenden Lagerelement umschlossen ist und der von der nachfolgenden Lagerhülse 72 bzw. 73 an ihrem oberen Ende zumindest teilweise umgriffen wird. Der abschließende, d.h. der unterste, Haltering 77 ist entsprechend dem aus dem ersten Ausführungsbeispiel bekannten Haltering ausgebildet, da sich an diesem keine weitere Lagerhülse anschließt.

Da die Tragearme 45, 74, 75 bezüglich der Achse 3 in axialer Richtung zueinander versetzt angeordnet sind, können diese unabhängig voneinander um 360° verschwenkt werden.

Die Erfindung ist nicht auf die beschriebenen Ausführungsbeispiele beschränkt. Insbesondere kann entsprechend dem zweiten Ausführungsbeispiel eine beliebige Anzahl von Lagerabschnitten vorgesehen sein, um beliebig viele Tragearme an dem Grundkörper 2 zu befestigen. Außerdem können an einer Befestigungsvorrichtung eine oder mehrere Lagerabschnitte, die in axialer Richtung versetzt zueinander angeordnet sind, und eine oder mehrere längsseits des Grundkörpers 2 angeordnete Lagerzapfen vorgesehen sein.

## Patentansprüche

1. Befestigungsvorrichtung (1) zum Befestigen von zumindest einem Tragarm (45), insbesondere Federarm, mit einem Grundkörper (2), der einen in axialer Richtung (28) am oberen Ende des Grundkörpers (2) angeordneten Verbindungsabschnitt (4) zum Aufhängen der Befestigungsvorrichtung (1) und zumindest einen zumindest bereichsweise zylindrischen Lagerabschnitt (5) aufweist,
wobei eine Lagerhülse (44) des Tragarms (45) auf den Lagerabschnitt (5) aufgebracht ist,
wobei der Lagerabschnitt (5) in axialer Richtung (28) am unteren Ende des Grundkörpers (2) angeordnet ist und über den restlichen Grundkörper (2) axial hinausragt,
wobei an dem Lagerabschnitt (5) ein Haltering (46) befestigt ist zum Halten der Lagerhülse (44) des Tragarms (45) an dem Lagerabschnitt (5), und
wobei sich die Lagerhülse (44) zumindest mittelbar an dem Haltering (46) abstützt und um die Achse (3) des Lagerabschnittes (5) drehbar ist,
**dadurch gekennzeichnet,**
**dass** der Außendurchmesser des Halterings (46) zumindest näherungsweise dem Außendurchmesser der Lagerhülse (44) des zu befestigenden Tragarms (45) entspricht.

2. Befestigungsvorrichtung nach Anspruch 1,
**dadurch gekennzeichnet,**
**daß** ein erstes Lagerelement (61) vorgesehen ist, das den Lagerabschnitt (5) des Grundkörpers (2) zumindest teilweise umschließt und zumindest teilweise an dem Haltering (46) anliegt,
wobei sich die Lagerhülse (44) mittels des ersten Lagerelementes (61) an dem Haltering (46) abstützt.

3. Befestigungsvorrichtung nach Anspruch 2,
**dadurch gekennzeichnet,**
**daß** ein zweites Lagerelement (65) vorgesehen ist, das den Lagerabschnitt (5) des Grundkörpers (2) zumindest teilweise umschließt und ein zweites Lager (66) zur Lagerung der Lagerhülse (44) bildet, das dem ersten durch
das erste Lagerelement (61) gebildeten Lager (62) gegenüberliegt.

4. Befestigungsvorrichtung nach Anspruch 3,
**dadurch gekennzeichnet,**
**daß** das zweite Lagerelement (65) den Lagerabschnitt (5) in einem Bereich (40) verbreiterten Durchmessers umschließt.

5. Befestigungsvorrichtung nach Anspruch 3 oder 4,
**dadurch gekennzeichnet,**
**daß** das zweite Lagerelement (65) des zweiten Lagers (66) hülsenförmig ausgebildet ist, wobei durch das zweite Lager (66) eine radiale Lagerung gegeben ist.

6. Befestigungsvorrichtung nach einem der Ansprüche 2 bis 5,
**dadurch gekennzeichnet,**
**daß** das erste Lagerelement (61) des ersten Lagers (62) kreisringförmig ausgebildet ist, wobei durch das erste Lager (62) eine axiale Lagerung gegeben ist.

7. Befestigungsvorrichtung nach einem der Ansprüche 1 bis 6,
**dadurch gekennzeichnet,**
**daß** der Haltering (46) mit zumindest einer Halteschraube an dem Lagerabschnitt (5) des Grundkörpers (2) befestigbar ist.

8. Befestigungsvorrichtung nach einem der Ansprüche 1 bis 7,
**dadurch gekennzeichnet,**
**daß** der Grundkörper (2) zumindest im wesentlichen rohrförmig ausgebildet ist.

9. Befestigungsvorrichtung nach einem der Ansprüche 1 bis 8,
**dadurch gekennzeichnet,**
**daß** die Befestigungsvorrichtung (1) eine an dem Verbindungsabschnitt (4) des Grundkörpers (2) befestigbare Sicherungseinrichtung (23) aufweist zum Sichern einer mit dem Verbindungsabschnitt (4) zur Aufhängung der Befestigungsvorrichtung (1) bestehenden Verbindung.

10. Befestigungsvorrichtung nach einem der Ansprüche 1 bis 9,
**dadurch gekennzeichnet,**
**daß** mehrere Lagerabschnitte (5, 70, 71) zum Befestigen mehrerer Tragarme (45, 74, 75) vorgesehen sind, die in der axialen Richtung (28) des Grundkörpers (2) aufeinanderfolgend angeordnet sind,
wobei jede der Lagerhülsen (44, 72, 73) der Tragarme (45, 74, 75) zur Abstützung an zumindest einem Haltering (46, 76, 77) anliegt.

11. Befestigungsvorrichtung nach einem der Ansprüche 1 bis 10,
**dadurch gekennzeichnet,**
**daß** die Befestigungsvorrichtung (1) einen längsseits des Grundkörpers (2) angeordneten Lagerzapfen (26) aufweist, auf den eine Lagerhülse (30) eines Tragarmes (31) aufsteckbar ist.

12. Befestigungsvorrichtung nach einem der Ansprüche 1 bis 11,
**dadurch gekennzeichnet,**
**daß** der Lagerabschnitt (5) des Grundkörpers rohrförmig ausgebildet ist.

13. Befestigungsvorrichtung nach einem der Ansprüche 1 bis 12,
**dadurch gekennzeichnet,**
**daß** die Lagerhülse (44) um die Achse (3) des Lagerabschnittes (5) um 360° drehbar ist.

## Claims

1. A fixing device (1) for fixing at least one support arm (45), in particular a spring arm, having a base body (2), which has a connecting portion (4) arranged in the axial direction (28) at the upper end of the base body (2) for the purpose of suspending the fixing device (1), and at least one bearing portion (5) which is at least partially cylindrical, it being possible to mount a bearing sleeve (44) of the support arm (45) on the bearing portion (5),
the bearing portion (5) being arranged in the axial direction (28) at the lower end of the base body (2) and projecting axially beyond the remaining base body (2),
a retaining ring (46) being fixed to the bearing portion (5) for the purpose of holding the bearing sleeve (44) of the support arm (45) on the bearing portion (5), and
the bearing sleeve (44) being at least indirectly supported on the retaining ring (46) and being rotatable about the axis (3) of the bearing portion (5),
**characterised in that**
the external diameter of the retaining ring (46) corresponds at least approximately to the external diameter of the bearing sleeve (44) of the support arm (45) to be fixed.

2. A fixing device according to Claim 1,
**characterised in that**
a first bearing element (61) is provided, which at least partially surrounds the bearing portion (5) of the base body (2) and at least partially abuts against the retaining ring (46),
the bearing sleeve (44) being supported on the retaining ring (46) by means of the first bearing element (61).

3. A fixing device according to Claim 2,
**characterised in that**
a second bearing element (65) is provided, which at least partially surrounds the bearing portion (5) of the base body (2) and forms a second bearing (66) for supporting the bearing sleeve (44), which lies opposite the first bearing (62) formed by the first bearing element (61).

4. A fixing device according to Claim 3,
**characterised in that**
the second bearing element (65) surrounds the bearing portion (5) in a region (40) which has a widened diameter.

5. A fixing device according to Claim 3 or 4,
**characterised in that**
the second bearing element (65) of the second bearing (66) is constructed in the form of a
sleeve, radial support being provided by the second bearing (66).

6. A fixing device according to one of Claims 2 to 5,
**characterised in that**
the first bearing element (61) of the first bearing (62) is constructed in the form of a circular
ring, axial support being provided by the first bearing (62).

7. A fixing device according to one of Claims 1 to 6,
**characterised in that**
the retaining ring (46) may be fixed to the bearing portion (5) of the base body (2) by at least one retaining screw.

8. A fixing device according to one of Claims 1 to 7,
**characterised in that**
the base body (2) is constructed at least substantially in the form of a tube.

9. A fixing device according to one of Claims 1 to 8,
**characterised in that**
the fixing device (1) has a securing means (23) which may be fixed to the connecting portion (4) of the base body (2) for the purpose of securing a connection which is formed by the connecting portion (4) for the purpose of suspending the fixing device (1).

10. A fixing device according to one of Claims 1 to 9,
**characterised in that**
a plurality of bearing portions (5, 70, 71) are provided for fixing a plurality of support arms (45, 74, 75), which are arranged successively in the axial direction (28) of the base body (2),
each of the bearing sleeves (44, 72, 73) of the support arms (45, 74, 75) abutting against at least one retaining ring (46, 76, 77) for the purpose of support.

11. A fixing device according to one of Claims 1 to 10,
**characterised in that**
the fixing device (1) has a bearing journal (26) arranged alongside the base body (2), it being possible to push a bearing sleeve (30) of a support arm (31) onto said bearing journal (26).

12. A fixing device according to one of Claims 1 to 11,
**characterised in that**
the bearing portion (5) of the base body is constructed in the form of a tube.

13. A fixing device according to one of Claims 1 to 12,
**characterised in that**
the bearing sleeve (44) may be rotated through 360° about the axis (3) of the bearing portion (5).

## Revendications

1. Dispositif de fixation (1) pour fixer au moins un bras porteur (45), en particulier un bras-ressort, comprenant un corps de base (2) qui comporte un tronçon de liaison (4), disposé en direction axiale (28) à l'extrémité supérieure du corps de base (2) pour suspendre le dispositif de fixation (1), et au moins un tronçon de palier (5) au moins partiellement cylindrique,
dans lequel une douille de palier (44) du bras porteur (45) est montée sur le tronçon de palier (5),
dans lequel le tronçon de palier (5) est agencé en direction axiale (28) à l'extrémité inférieure du corps de base (2) et dépasse axialement au-delà du reste du corps de base (2),
dans lequel une bague de maintien (46) est fixée sur le tronçon de palier (5) pour maintenir la douille de palier (44) du bras porteur (45) sur le tronçon de palier (5), et
dans lequel la douille de palier (44) s'appuie au moins indirectement sur la bague de maintien (46) et est capable de rotation autour de l'axe (3) du tronçon de palier (5),
**caractérisé en ce que**
le diamètre extérieur de la bague de maintien (46) correspond au moins approximativement au diamètre extérieur de la douille de palier (44) du bras porteur (45) à fixer.

2. Dispositif de fixation selon la revendication 1,
**caractérisé en ce qu'**il est prévu un premier élément de palier (61), qui entoure au moins partiellement le tronçon de palier (5) du corps de base (2) et qui s'applique au moins partiellement contre la bague de maintien (46),
dans lequel la douille de palier (44) s'appuie contre la bague de maintien (46) au moyen du premier élément de palier (61).

3. Dispositif de fixation selon la revendication 2,
**caractérisé en ce qu'**il est prévu un deuxième élément de palier (65), qui entoure au moins partiellement le tronçon de palier (5) du corps de base (2) et qui forme un deuxième palier (66) pour le montage de la douille de palier (44), qui est opposé au premier palier (62) formé par le premier élément de palier (61).

4. Dispositif de fixation selon la revendication 3,
**caractérisé en ce que** le deuxième élément de palier (65) entoure le tronçon de palier (5) dans une zone (40) à diamètre élargi.

5. Dispositif de fixation selon la revendication 3 ou 4,
**caractérisé en ce que** le deuxième élément de palier (65) du deuxième palier (66) est réalisé en forme de douille, le deuxième palier (66) assurant un montage radial.

6. Dispositif de fixation selon l'une des revendications 2 à 5,
**caractérisé en ce que** le premier élément de palier (61) du premier palier (62) est réalisé en forme de bague circulaire, le premier palier (62) assurant un montage axial.

7. Dispositif de fixation selon l'une des revendications 1 à 6,
**caractérisé en ce que** la bague de maintien (46) peut être fixée sur le tronçon de palier (5) du corps de base (2) par au moins une vis de maintien.

8. Dispositif de fixation selon l'une des revendications 1 à 7,
**caractérisé en ce que** le corps de base (2) est réalisé au moins essentiellement sous forme tubulaire.

9. Dispositif de fixation selon l'une des revendications 1 à 8,
**caractérisé en ce que** le dispositif de fixation (1) comprend un moyen de blocage (23) susceptible d'être fixé sur le tronçon de liaison (4) du corps de base (2), pour bloquer une liaison établie avec le tronçon de liaison (4) pour la suspension du dispositif de fixation (1).

10. Dispositif de fixation selon l'une des revendications 1 à 9,
**caractérisé en ce qu'**il est prévu plusieurs tronçons de palier (5, 70, 71) pour fixer plusieurs bras porteurs (45, 74, 75), qui sont agencés les uns après les autres dans la direction axiale (28) du corps de base (2),
dans lequel chacune des douilles de palier (44, 72, 73) des bras porteurs (45, 74, 75) s'applique contre au moins une bague de maintien (46, 76, 77) pour le soutien.

11. Dispositif de fixation selon l'une des revendications 1 à 10,
**caractérisé en ce que** le dispositif de fixation (1) comprend un tenon de palier (26) agencé le long du corps de base (2) et sur lequel peut être enfilée une douille de palier (30) d'un bras porteur (31).

12. Dispositif de fixation selon l'une des revendications 1 à 11,
**caractérisé en ce que** le tronçon de palier (5) du corps de base est réalisé sous forme tubulaire.

13. Dispositif de fixation selon l'une des revendications 1 à 12,
**caractérisé en ce que** la douille de palier (44) est capable de tourner sur 360° autour de l'axe (3) du tronçon de palier (5).
